# EUROPEAN PATENT APPLICATION

(11) **EP 4 787 657 A1**
(43) Date of publication of application: **05.08.2026**
(21) Application number: 26153942.3
(22) Date of filing: 23.01.2026
(51) Int. Cl.: H02J 3/38, H02M 7/483

(54) **HOME ENERGY MANAGEMENT POWER ELECTRONIC TOPOLOGIES PROVIDING AND DEMAND RESPONSE**

(30) Priority: 25.01.2025 US 202563749549 P
(71) Applicant: Carrier Corporation, Palm Beach Gardens, FL 33418 (US)
(72) Inventor: AGIRMAN, Ismail, Palm Beach Gardens, 33418 (US)
(74) Representative: Dehns

(57) **Abstract**

A home energy management system (HEMS) includes a power supply configured to provide alternating current (AC) power, at least one load electrically connected to the power supply, and a modular multi-level (MMC) converter configured to receive power from the power supply and to supply a regulated converter output to the at least one load. The MMC includes one or more converter branches and a filter. The converter branch is in signal communication with the power supply and includes a plurality of bridge cells. Each bridge cell includes a plurality of power switches and a battery. The filter is electrically connected between the at least one load and the at least one converter branch. The filter is configured to reduce harmonic distortion and highfrequency noise in the converter output.

## Description

The invention relates to home energy management systems and multi-level converters, and more particularly, to home energy management system power electronics topologies that provide harmonic correction and demand response solutions.

Electrical energy drives a myriad of devices and equipment in commercial, industrial, residential applications, and data centers. For example, electrical energy drives lights, motors, household appliances, medical equipment, computers, air conditioning systems, electric vehicle charging stations, data centers processing and cooling needs, and many other electrical devices. In most areas, power utilities generate and distribute electricity through an AC power grid. Shortages and/or increased costs associated with the use of fossil fuels, intermittency of renewable resources, power demand and supply variabilities, and increased demand of energy, among other factors, significantly impact the continuous availability and cost of electricity to consumers and businesses. In general, shortages and/or increased costs often occur during times of peak demand. Peak demand may occur based on time of day, such as in the morning or in the evening. On a more random basis, peak demand (or a demand greater than an available supply) may occur as a result of a natural disaster, or during extensive times of e.g., cloudiness, if the power from the grid comes from solar energy, or wind variability, if the power from the grid comes from wind turbines. For example, a hurricane or earthquake may damage the power grid and/or electric generators of the power utilities, thereby resulting in substantial loss of electric power to commercial, industrial, and residential applications. Repairs to these damaged lines and generators may take hours, days, or weeks. Various sites also may lose power from the power grid for other reasons, including maintenance. During these times of lost power, the sites may be unable to continue operations. Moreover, increasing numbers of data centers significantly add to the demand of energy from the grid.

Often, electrical energy from the power grid is more expensive during times of peak demand. For example, a power utility may employ low cost electrical generators during periods of minimum demand, while further employing high cost electrical generators during periods of peak demand. Unfortunately, the existing infrastructure does not adequately address these different costs associated with peak and minimum demands. As a result, commercial, industrial, data centers and residential applications typically draw power from the power grid during times of peak demand, despite the higher costs associated with its generation.

Some energy consumers, such as commercial, industrial, data centers, and residential users may be driven by factors other than cost, such as a desire to support sustainable energy options as further described below.

According to a first aspect of the invention, there is provided a home energy management system (HEMS) including a power supply configured to provide alternating current (AC) power, at least one load electrically connected to the power supply, and a modular multi-level (MMC) converter configured to receive power from the power supply and to supply a regulated converter output to the at least one load. The MMC includes one or more converter branches and a filter. The converter branch is in signal communication with the power supply and includes a plurality of bridge cells. Each bridge cell includes a plurality of power switches and a battery. The filter is electrically connected between the at least one load and the at least one converter branch. The filter is configured to reduce harmonic distortion and high-frequency noise in the converter output.

Optionally, the power switches are connected together to establish a bridge rectifier and the battery is connected in parallel with the bridge rectifier.

Optionally, the power supply is a three-phase power supply and the MMC converter is a multiphase MMC configured to receive power from the three-phase power supply.

Optionally, at least one converter branch comprises a plurality of converter branches, each of the converter branches corresponding to a respective phase of the three-phase power supply, and each converter branch comprises a plurality of bridge cells, each of the bridge cells including a plurality of power switches and a battery.

Optionally, the power supply is a single-phase power supply and the MMC converter is a single-phase MMC.

Optionally, the at least one converter branch is a single converter branch.

Optionally, the plurality of power switches is a transistor configured to provide high-speed switching control.

Optionally, the battery within each bridge cell of the MMC is a rechargeable battery configured to store energy for continuous operation and to dynamically adjust voltage levels.

Optionally, the filter is a delta filter comprising capacitors arranged in a delta configuration.

Optionally, the MMC is configured to be dynamically controlled such that the voltage levels of the stepped output are adjusted based on the load requirements.

Optionally, the HEMS comprises a controller configured to regulate the operation of the plurality of power switches to optimize energy usage and minimize power losses.

According to a second aspect of the invention, there is provided a multi-level converter (MMC) configured to supply power to at least one load included in home energy management system (HEMS). The MMC includes a filter configured to receive power to be converted to drive the at least one load, and at least one converter branch electrically connected to the filter to receive the power and electrically connected to the at least one to deliver a converted power. The at least one converter branch includes a plurality of bridge cells. Each of the bridge cells includes a plurality of power switches and a battery operable together to generate the converted power.

Optionally, the power switches are connected together to establish a bridge rectifier and the battery is connected in parallel with the bridge rectifier.

Optionally, the at least one converter branch includes a plurality of converter branches that establish a MMC.

Optionally, each of the converter branches correspond to a respective phase of a three-phase power supply.

Optionally, the at least one converter branch is a single converter branch to establish a single-phase MMC in signal communication with single-phase power supply.

Optionally, each of the plurality of power switches is a transistor configured to provide high-speed switching control.

Optionally, the battery is a rechargeable battery configured to store energy for continuous operation and to dynamically adjust voltage levels.

Optionally, the filter is a delta filter comprising capacitors arranged in a delta configuration.

Optionally, the at least one converter branch is configured to be dynamically controlled such that voltage levels of the stepped output are adjusted based on load requirements of the at least one load.

The MMC of the second aspect of the invention may be suitable for and/or configured to be used in the HEMS of the first aspect of the invention, and hence may comprise features of the MMC discussed in relation to the first aspect of the invention. The HEMS of the first aspect of the invention may comprise the MMC of the second aspect of the invention, and hence may comprise features of the MMC discussed in relation to the second aspect of the invention. According to a third aspect of the invention there is provided a home energy management system according to the first aspect of the invention, comprising a modular multi-level converter according to the second aspect of the invention.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

The present disclosure is illustrated by way of example and not limited in the accompanying figures in which like reference numerals indicate similar elements.
FIG. 1 depicts a system in an example embodiment.
FIG. 2 depicts a controller in an example embodiment.
FIG. 3A depicts an electrical architecture in an example embodiment.
FIG. 3B depicts an electrical architecture in an example embodiment.
FIG. 4A depicts an electrical architecture in an example embodiment.
FIG. 4B depicts an electrical architecture in an example embodiment.
FIG. 5A depicts an electrical architecture for a fixed speed compressor having a DC architecture in an example embodiment.
FIG. 5B depicts an electrical architecture for a fixed speed compressor having an AC architecture in an example embodiment.
FIG. 5C depicts an electrical architecture for a variable speed compressor having a DC architecture in an example embodiment.
FIG. 5D depicts an electrical architecture for a variable speed compressor having an AC architecture in an example embodiment.
FIG. 6 depicts an electrical architecture for a compressor powered by a multilevel inverter in an example embodiment.
FIG. 7 depicts one phase leg of a five level, multiphase inverter in an example embodiment.
FIG. 8 depicts communication between a controller, a thermostat and a remote system in an example embodiment.
FIG. 9 depicts a control process in an example embodiment.
FIG. 10 depicts a multi-phase modular multilevel converter (MMC) topology for a home energy management system according to a non-limiting embodiment of the present disclosure;
FIG. 11 depicts the MMC topology shown in FIG. 10, interfaced to a solar panel power source;
FIG. 12 depicts a single-phase MMC topology for a home energy management system according to a non-limiting embodiment of the present disclosure; and
FIG. 13 depicts a neutral-point clamp (NPC) topology for a home energy management system according to a non-limiting embodiment of the present disclosure.

With current global electrification and decarbonization efforts, there are incentives to use efficient, optimized, all-electric air conditioning systems that provide comfort while being dispatchable (on-off, adjusted or variable) under different pricing conditions, or after receiving a utility signal. By way of example, the utility signal may be received from an electrical AC power grid, and may include an independent system operator (ISO), which may include an independent, federally regulated entity established to coordinate regional transmission in a non-discriminatory manner and ensure the safety and reliability of the electric system, or a regional transmission organization (RTO) which may operate bulk electric power systems across much of a geographic area and are generally independent, membership-based, non-profit organizations that ensure reliability and optimize supply and demand bids for wholesale electric power, or from a virtual power plant, generally considered to include a connected aggregation of distributed energy resource (DER) technologies providing integration of renewables and demand flexibility. Reference to a utility refers to one or more entities involved in the generation, transmission and/or distribution of electrical power.

Embodiments described herein relate to home energy management system (HEMS) power electronics topologies that provide harmonic correction and demand response solutions. A HEMS power electronics topology according to a non-limiting embodiment implements a modular multilevel converter topology (MMC), which arguments direct current (DC) link capacitors with batteries as energy storage to improve the performance of the MMC. In some embodiments, the batteries can also be interfaced to a solar energy source (e.g., a solar panel).

In another non-limiting embodiment, a HEMS power electronics topology implements a neutral point clamped (NPC) topology, where batteries augment the DC link, both for performance improvement and also as an energy storage for demand response. In some embodiments, the battery is connected on the DC link only and the power factor correction (PFC) section is established as an I-topology or T topology. The batteries, however, are connected in series to benefit widely available low voltage batteries. In all cases, the topologies described herein can charge the batteries and/or to discharge the batteries based on demand response.

According to a non-limiting embodiment, an HEMS implements an MMC having a series arrangement of switching bridge cells 1050 connected to a power supply. The switching bridge cells 1050 can be dynamically controlled to generate a multilevel output that closely approximates a sinusoidal waveform. This waveform is filtered by a delta filter and smoothed by converter-side inductors and load-side inductors to produce a stable and efficient DC power supply for motor-driven loads (e.g., compressors, fans, etc.) implemented in the HEMS. The combination of the MMC topology and the filtering components ensures high-quality power conversion with low harmonic distortion, making the HEMS suitable for applications requiring precise voltage regulation and high efficiency.

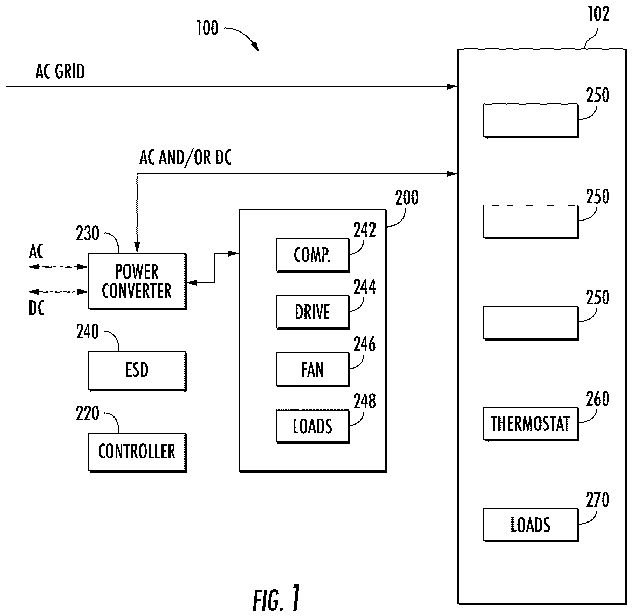

With reference now FIG. 1, a system 100 for implementing a is illustrated according to a non-limiting embodiment of the present disclosure. In a non-limiting embodiment, the system 100 includes components of an air conditioning system. The system 100, however, is not limited to an air conditioning system, but instead may include other components included in a heating, ventilation and air condition (HVAC) system. The phrase "air conditioning" is intended to include one or more of heating, cooling, ventilation, humidification, dehumidification, refrigeration, hot water heating, chilling water or fluid, air filtration, and other known air processing operations, or a combination of any of the above. The air conditioning system may include known types of systems such as heat pumps, geothermal heat pumps, chillers, split systems, packaged systems, all-in-one systems, etc. The air conditioning system 100 includes a first unit 200 and one or more second units 250. Depending on the nature of the air conditioning system, the first unit 200 and the second unit(s) 250 may be separately located (indoors or outdoors) or co-located (indoors or outdoors). For example, in a split system, the first unit 200 is an outdoor unit (e.g., compressor and heat exchanger) and the second unit(s) 250 are indoor units (e.g., expansion mechanisms, heat exchangers). In a packaged system (e.g., rooftop or ground), the first unit 200 and the second unit 250 are co-located in a single footprint outside a building. In a chiller, the first unit 200 and the second unit 250 may be co-located (both indoor or outdoor) or separately located. Certain all-in-one systems may have the first unit 200 and the second unit 250 co-located inside a building.

In the example shown in FIG. 1, the first unit 200 may be an outdoor unit of a split system located on ground level next to a building 102, on a rooftop of the building 102 or any other location. The second unit(s) 250 may be located inside the building 102, as is common with split systems. It is understood that FIG. 1 is one example, and embodiments are not limited to split systems.

The system 100 includes a controller 220, a power converter 230 and an energy storage device (ESD) 240. FIG. 1 is an example embodiment, and the location of components is not limited to that shown in FIG. 1. For example, the power converter 230, energy storage device 240 and controller 220 may be separate from the first unit 200, which houses the compressor 242, drive 244, fan 246 and load(s) 248. The first unit 200 may include a control unit (not shown) for controlling operation of the first unit 200. This allows components of the described embodiments to be retrofit to existing first units 200 of air conditioning systems and/or second units 250 of air conditioning systems. One or more of the power converter 230, energy storage device 240 and controller 220 may be located in the first unit 200. One or more of the power converter 230, energy storage device 240 and controller 220 may be located adjacent to or outside the first unit 200. One or more of the power converter 230, energy storage device 240 and controller 220 may be located in building 102.

The first unit 200 may include a heat exchanger (not shown) that will serve as a condenser/gas cooler and/or as an evaporator, as part of a vapor compression refrigeration cycle.

In the figures, the locations of all components in the drawings are examples, and embodiments include modification of the locations of components shown in the drawings. For example, components illustrated as connected to the first unit 200, may be retrofit components added to an existing first unit 200. Although shown as separate boxes, elements may be joined into sub-assemblies and assemblies, anywhere in the system, indoor or outdoor, without departing from embodiments of the disclosure.

The controller 220 may communicate with an air conditioning controller system controller and/or an energy storage device controller. In some embodiments, a single controller may implement all the functions of the controller 220, air conditioning controller and energy storage device controller. The controller 220 communicates with components of the described systems using wired and/or wireless connections, which are not illustrated in the drawings.

The system of FIG. 1, and embodiments thereof described herein, allow for one or more components of the air conditioning system, and other loads not associated with the air conditioning system, to be powered solely by an AC power grid, powered solely by the energy storage device 240, and powered by both the AC power grid and the energy storage device 240, in conjunction. The one or more components of the air conditioning system include components in the first unit 200, components in the second unit 250.

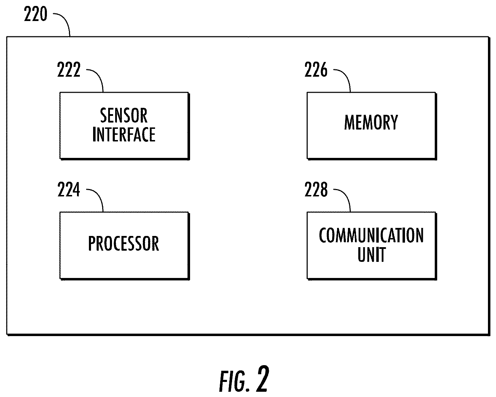

FIG. 2 depicts the controller 220 in accordance with an embodiment. The controller 220 includes a sensor interface 222 that can obtain operational parameters of the air conditioning system, such as pressures, temperatures, etc. As known in the art, the controller 220 can adjust operation of the air conditioning system based on sensed operational parameters. The controller 220 includes a processor 224 that controls operation of the system 100. The processor 224 may be implemented using a general-purpose microprocessor executing a computer program stored on a storage medium to perform the operations described herein. Alternatively, the processor 224 may be implemented in hardware (e.g., ASIC, FPGA) or in a combination of hardware/software. The processor 224 allows the controller 220 to perform computations locally, also referred to as edge computing. The processor 224 can send commands to other components of the air conditioning system 100 based on a result of the local computations.

The controller 220 includes a memory 226 that may store a computer program executable by the processor 224, reference data, sensor data, etc. The memory 226 may be implemented using known devices, such as random access memory. The controller 220 includes a communication unit 228 which allows the controller 220 to communicate with other components of the system 100, such as first unit 200, second units 250 and a thermostat 260. The communication unit 228 may be implemented using wired connections (e.g., LAN, ethernet, twisted pair, etc.) and/or wireless connections (e.g., Wi-Fi, near field communications ("NFC"), Bluetooth, etc.).

In some embodiments, communication unit 228 may provide high-speed data communications over existing wiring systems and/or communication with newer equipment having a high-speed bus, while maintaining communications with existing equipment (e.g., having RS-485 communications bus). In some embodiments, an HVAC equipment may include 4 wires used for data communications, Power, Ground, Data+, and Data-. Of these lines, Data+ and Data- are used to carry the low-speed, standard RS-485 data. The power line is used to power the wall control and comes from a second unit 250. This same power line is carried to the first unit 200 although it is generally not used. The ability to take advantage of the power and ground lines of the 4-wire system (referred to as "Power Line Communications" (PLC) technology) allows digital/data signals to be sent over power lines. In some embodiments, PLC technology may allow for data transmission at or near gigabit speed rates using standard 2-conductor wiring. This includes the 2 wires represented by Power and Ground of the HVAC equipment. It should be appreciated that other data transmission speeds may be possible. In some embodiments, the communication unit 228 of the present disclosure may be configured such that, while the PLC high-speed communication is occurring over the Power and Ground line of the 4-wire system, the low-speed RS-485 communication can also be occurring on the Data+ and Data- lines. In some embodiments, the ability to use high speed communications or a combination of high speed and low speed communications enable the controller 220 to utilize machine-learning (ML) based or artificial intelligence (AI) based, algorithms. In some embodiments, the high speed and low speed communications may occur approximately simultaneously (e.g., within milliseconds of one another). This may allow the standard HVAC wire to communicate with both RS-485 controlled equipment as well as HVAC equipment which contains the additional PLC transceivers. This may be advantageous because both new high-speed HVAC equipment and existing RS-485 HVAC equipment can co-exist on existing wiring of the building.

Referring to FIG. 1, the power converter 230 is used to perform any necessary power conversions including one or more of AC-AC, AC-DC, DC-AC and DC-DC. The power converter 230 may include several power converters at different locations in the system 100. The power converter(s) 230 may operate in a bi-directional manner so that one or more power conversions are bi-directional. As shown in FIG. 1, the power converter 230 is connected to AC and/or DC power sources and/or loads. The power converter 230 may also provide power to loads in the building 102, including the second units 250 (if in the building 102), the thermostat 260 and loads 270. In conventional modes, the loads in building 102 will receive AC power from the AC power grid directly. The controller 220 may choose whether the power will come from the AC power grid or from the power converter 230. Example embodiments of the power converter 230 are described herein.

The energy storage device 240 is configured to provide, under certain circumstances, at least a portion of the power to operate one or more of components of the air conditioning system, such as the first unit 200, the second unit(s) 250, along with the indoor load(s) 270, and any other loads. The energy storage device 240 may be implemented using apparatus for storing electrical energy including one or more of, for example, a battery, battery modules, battery cells, supercapacitor, etc. The battery 240 may include several cells in either modular form or as a stand-alone, multi-cell array. The battery 240 may be made of a single or multiple packaged self-contained systems, battery modules or individual cells. The battery 240, such as a complete plug and play battery, may include a box, wires, cells, and modules. For example, the battery 240 may include a group of cells configured into a self-contained mechanical and electrical unit. The energy storage device 240 may include other components (e.g., an ESD management system (ESDMS)) that are electrically coupled to the energy storage device 240 and may be adapted to communicate directly or through the ESDMS to controller 220.

The first unit 200 also includes components used as part of the air conditioning system, and includes a compressor 242, one or more drives 244, a fan 246, and other loads 248, and a control unit (not shown). A heat exchanger (not shown) in the first unit 200 may act as evaporator or condenser/gas cooler. These components are described in further detail herein when relevant to embodiments.

In a split system, inside the building 102, one or more second units 250 are positioned to condition one or more zones of the building 102. The second units 250 may be employed using a variety of known second units, including variable air volume (VAV) units, liquid cooled second units, fan coil units, furnaces, air handler (s), etc., which usually include heat exchangers. In other types of systems (e.g., packaged or chillers) the second unit(s) 250 may be located outdoors and include any form of heat exchangers such as cooling towers, etc.

An optional thermostat 260 provides a user interface for the air conditioning system 100, and allows the user to enter operational modes of the air conditioning system 100, enter setpoints for various zones of the system 100, etc. The indoor loads 270 may be supplied electrical power by the first unit 200. The indoor loads 270 include a wide variety of loads, such as appliances, lighting, electric vehicle chargers, etc. A thermostat 260 is not required and other techniques may be used for control of the air conditioning system.

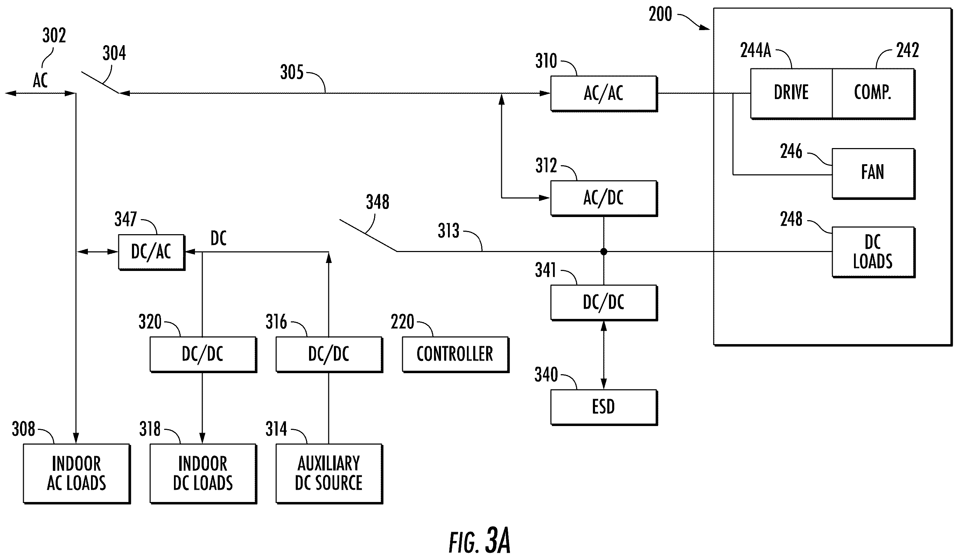

FIG. 3A depicts an electrical architecture in an example embodiment. The location of components in FIG. 3A is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the disclosure.

As shown in FIG. 3A, an AC power grid 302 is connected to the first unit 200 through a grid disconnect 304, which is under control of the controller 220. This allows the first unit 200 to be powered by the energy storage device 240, independent of the AC power grid 302. The first unit 200 may also be powered by both the AC power grid 302 and the energy storage device 240 in conjunctions. The disconnect 304 may also be implemented as a mechanical switch controlled, for example by controller 220 or in software by the controller 220 by controlling one or more power converters.

The AC power grid 302 is connected to indoor AC loads 308 (such as an air handler, or any fixture in residential, commercial, industrial buildings or data centers). The AC power grid 302 is also provided to an AC/AC converter 310 which supplies conditioned AC power to a compressor drive 244A of the compressor 242 and the fan 246. The AC/AC converter 310 may control the amplitude, frequency, phase, etc. of AC power provided to the compressor drive 244A of the compressor 242 and the fan 246.

The AC power grid 302 may also be connected to one of a unidirectional or a bi-directional AC/DC converter 312 which interfaces the AC power bus 305 with a DC power bus 313. The DC power bus 313 supplies power to the DC loads 248, which may be located in the first unit 200. Under certain conditions, the DC power bus 313 supplies power to the one or more of components of the air conditioning system (e.g., compressor 242 and fan 246) through the bi-directional AC/DC converter 312 and the AC/AC converter 310. This allows the one or more of components of the air conditioning system to operate independent of, or in conjunction with, the AC power grid 302. The bi-directional AC/DC converter 312 also allows power from the DC bus 313 to be directed to the AC power grid 302.

The DC power bus 313 may be powered by the energy storage device 240. In charging mode, the DC power bus 313 is used to charge the energy storage device 240 (charger not shown). The DC power bus 313 may also be powered by one or more auxiliary DC sources 314, such as solar DC power, wind DC power, geothermal DC power, fuel cells, etc. A DC/DC converter 316 may be used to couple the auxiliary DC sources 314 to the DC power bus 313. The DC power bus 313 may provide power to indoor DC loads 318. A DC/DC converter 320 may be used to couple the indoor DC loads 318 to the DC power bus 313. An DC/AC converter 347 may be used to couple the DC power bus 313 to indoor AC loads 308 through a disconnect 348. In some operating modes, the energy storage device 240 is used to power indoor AC loads 308. The AC/AC converter 310, the AC/DC converter 312, the DC/DC converter 320, the DC/DC converter 316 and the DC/AC converter 347 may be implementations of the power converter 230 in FIG. 1. In some embodiments, the one or more auxiliary DC sources 314 are connected to the AC power bus 305 through a DC/AC converter (not shown). In other embodiments, the one or more auxiliary power sources provide AC power, which is connected to the AC bus 305 and/or the DC bus 313 through an appropriate AC/AC converter or AC/DC converter.

The compressor drive 244A may be implemented in a variety of manners. In one embodiment, the compressor drive 244A is a switch, such as a contactor or relay, which connects the compressor 242 to the output of the AC/AC converter 310. In other embodiments, the compressor drive 244A may be a power converter, such as an AC/AC converter or an AC/DC converter.

An optional DC/DC converter 241 may provide power conversion between the energy storage device 240 and the DC power bus 313. The DC/DC converter 241 may be a bi-directional converter used to step up or step down a DC voltage so that the energy storage device 240 can power the DC power bus 313 and the DC power bus 313 can charge the energy storage device 240. The DC/DC converter 241 may be part of the energy storage device 240 or may be a separate component from the energy storage device 240.

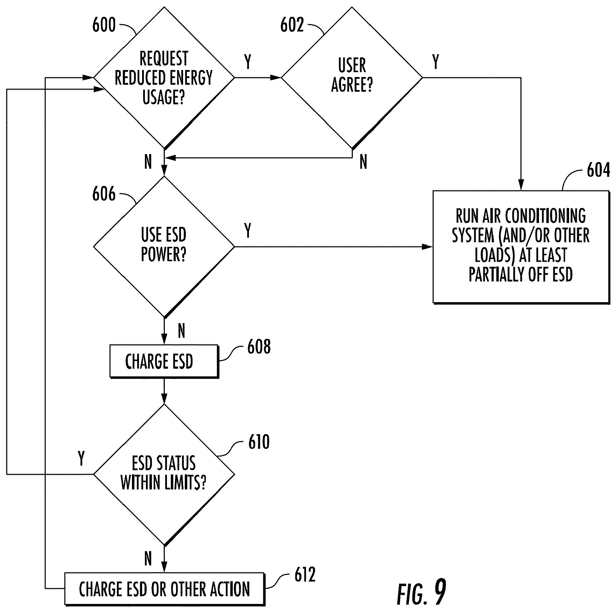

The electrical architecture of FIG. 3A allows one or more components of the air conditioning system (first unit 200 and or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

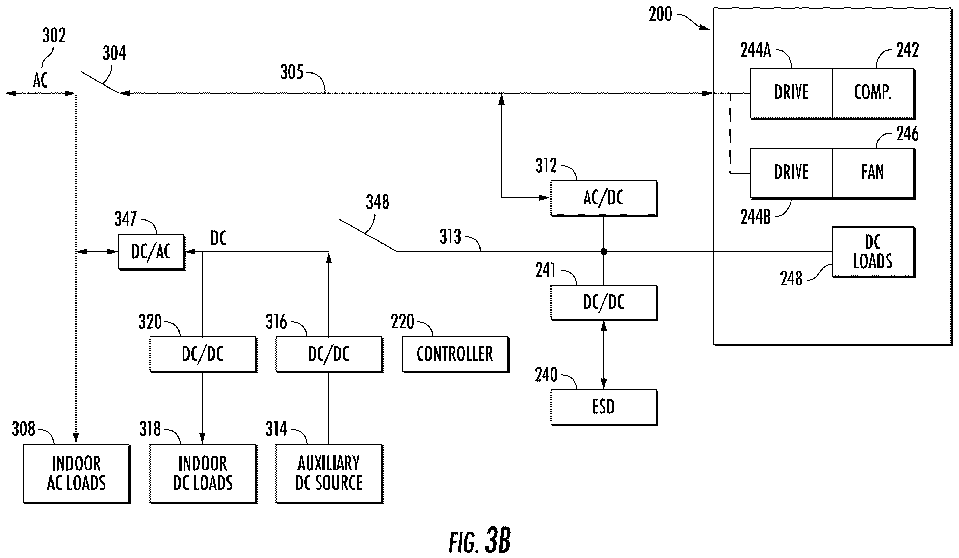

FIG. 3B depicts an electrical architecture in an example embodiment. The location of components in FIG. 3B is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the disclosure.

FIG. 3B is similar to FIG. 3A, with the exception that the AC/AC converter 310 is eliminated. The compressor 242 is provided power from a compressor drive 244A. The compressor drive 244A may be a switch, such as a contactor or relay, which connects the compressor 242 to the AC power bus 305. In other embodiments, the compressor drive 244A may be a power converter, such as an AC/AC converter or an AC/DC converter. The compressor drive 244A may be controlled by the controller 220.

The fan 246 is provided power from a fan drive 244B. The fan drive 244B may be a switch, such as a contactor or relay, which connects the fan 246 to the AC power bus 305. In other embodiments, the fan drive 244B may be a power converter, such as an AC/AC converter or an AC/DC converter. The fan drive 244B may be controlled by the controller 220.

The electrical architecture of FIG. 3B allows one or more components of the air conditioning system (first unit 200 and or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

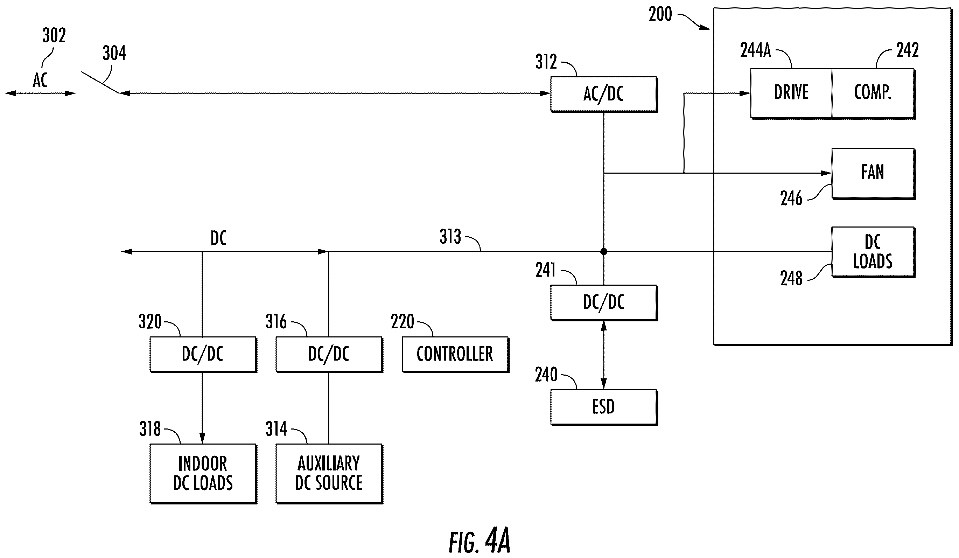

FIG. 4A depicts an electrical architecture in another example embodiment. The location of components in FIG. 4A is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the disclosure.

In FIG. 4A, the compressor drive 244A and the fan 246 are DC powered, and as such, there is no need for the AC/AC converter 310. The bi-directional AC/DC converter 312 allows the energy storage device 240 to supply power to one or more components of the air conditioning system and/or feed power from the DC bus 313 to the AC power grid 302, under certain conditions. The bi-directional AC/DC converter 312 interfaces the AC power bus 305 with a DC power bus 313.

The compressor drive 244A may be a switch, such as a contactor or relay, which connects the compressor 242 to the DC power bus 313. In other embodiments, the compressor drive 244A may be a power converter, such as a DC/AC converter or a DC/DC converter. The compressor drive 244A may be controlled by the controller 220.

The electrical architecture of FIG. 4A allows one or more components of the air conditioning system (first unit 200 and or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

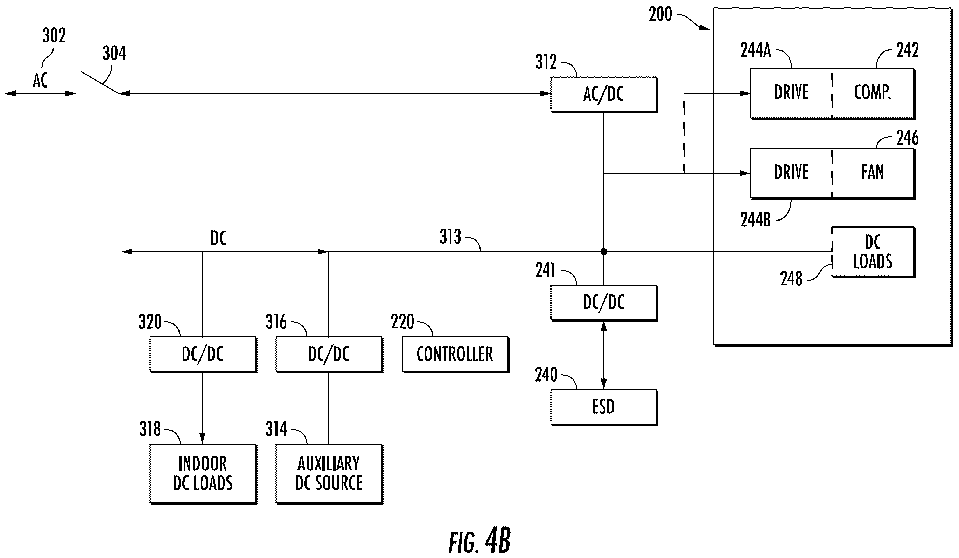

FIG. 4B depicts an electrical architecture in another example embodiment. The location of components in FIG. 4B is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the disclosure.

FIG. 4B is similar to FIG. 4A, with the exception that the fan 246 includes a fan drive 244B. The fan drive 244B may be a switch, such as a contactor or relay, which connects the fan 246 to the DC power bus 313. In other embodiments, the fan drive 244B may be a power converter, such as a DC/AC converter or a DC/DC converter. The fan drive 244B may be controlled by the controller 220.

The electrical architecture of FIG. 4B allows one or more components of the air conditioning system (first unit 200 and or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

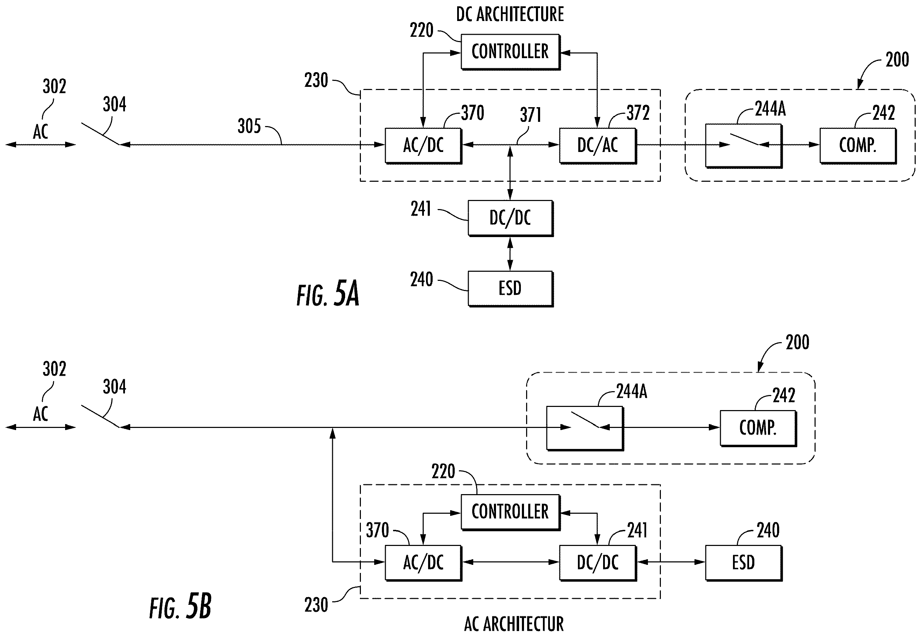

FIG. 5A depicts a DC electrical architecture for a fixed speed first unit 200 in an example embodiment. The location of components in FIG. 5A is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the disclosure.

Not all components of the first unit 200 are shown for ease of illustration and explanation. The power converter 230 may be used in conjunction with the embodiments described above, or other embodiments. For example, one or more auxiliary DC sources 314 may be connected to the energy storage device 240 (via a DC bus) to supplement power from the energy storage device 240. As shown in Figure 5A, AC power from the AC power grid 302 is supplied through the grid disconnect 304 to a power converter 230. The power converter 230 includes an AC/DC converter 370 and a DC/AC converter 372. The output of the DC/AC converter 372 is provided to the compressor 242, through a compressor drive 244A. As the compressor 242 is fixed speed, the compressor drive 244A may be a switch, such as a contactor or relay.

Both the AC/DC converter 370 and the DC/AC converter 372 operate under the control of the controller 220. Between the AC/DC converter 370 and the DC/AC converter 372 is a DC link 371 that is connected to the energy storage device 240, optionally through the DC/DC converter 241. Under this arrangement, energy storage device 240 may be charged by the power converter 230. Alternatively, the energy storage device 240 may provide DC power to the DC link 371 to power the DC/AC converter 372 and the compressor 242. This allows the first unit 200 to operate independent of, or in conjunction with, the AC power grid 302. The AC/DC converter 370 may be bi-directional to allow the energy storage device 240 to provide power to, and be charged from, the AC power grid 302.

The controller 220, the power converter 230, the energy storage device 240, DC\DC converters 320 and 316, and DC/AC converter 347, and the DC/DC converter 241 may be retrofit to an existing first unit 200. This allows the energy storage device 240 to be added to existing air conditioning systems to enable the first unit 200 to operate independent of the AC power grid 302 or operate under power from both the AC power grid 302 and the energy storage device 240. It allows also for auxiliary power sources to be added in a modular way.

The electrical architecture of FIG. 5A allows one or more components of the air conditioning system (first unit 200 and or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

FIG. 5B depicts an AC electrical architecture for a fixed speed first unit 200 in an example embodiment. The location of components in FIG. 5B is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the disclosure.

Not all components of the first unit 200 are shown for ease of illustration and explanation. The power converter 230 may be used in conjunction with the embodiments described above, or other embodiments. For example, one or more auxiliary DC sources 314 may be connected to the energy storage device 240 (via a DC bus) to supplement power from the energy storage device 240.

In FIG. 5B, the power converter 230 includes a DC/DC converter 241 coupled to the energy storage device 240 and an AC/DC converter 370. The AC/DC converter 370 may be bi-directional to allow the energy storage device 240 to provide power to, and be charged from, the AC power grid 302. As the compressor 242 is fixed speed, the compressor drive 244A may be a switch, such as a contactor or relay.

The controller 220, the power converter 230, the energy storage device 240 may be retrofit to an existing first unit 200. This allows the energy storage device 240 to be added to existing air conditioning systems to enable the first unit 200 to operate independent of the AC power grid 302 or operate under power from both the AC power grid 302 and the energy storage device 240.

The electrical architecture of FIG. 5B allows one or more components of the air conditioning system (first unit 200 and or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

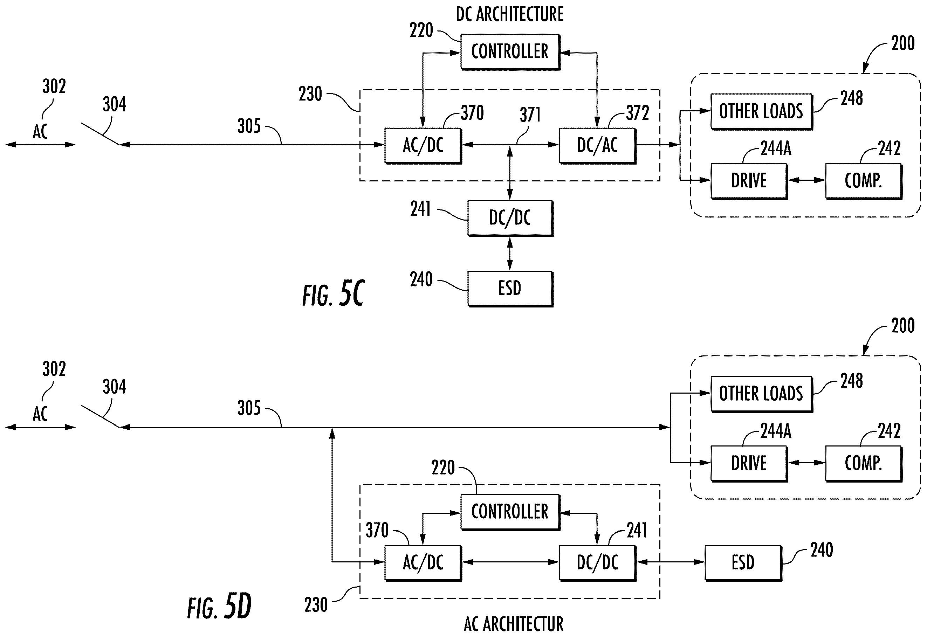

FIG. 5C depicts a DC electrical architecture for a variable speed first unit 200 in an example embodiment. The location of components in FIG. 5C is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the disclosure.

FIG. 5C is similar to FIG. 5A, with the exception that the compressor drive 244A provides for variable speed operation of the compressor 242. Other loads 248 of the first unit 200 may be powered from the output of the DC/AC converter 372.

The controller 220, the power converter 230, the energy storage device 240 and the DC/DC converter 241 may be retrofit to an existing first unit 200. This allows the energy storage device 240 to be added to existing air conditioning systems to enable the first unit 200 to operate independent of the AC power grid 302 or operate under power from both the AC power grid 302 and the energy storage device 240.

Not all components of the first unit 200 are shown for ease of illustration and explanation. The power converter 230 may be used in conjunction with the embodiments described above, or other embodiments. For example, one or more auxiliary DC sources 314 may be connected to the energy storage device 240 (via a DC bus) to supplement power from the energy storage device 240.

The electrical architecture of FIG. 5C allows one or more components of the air conditioning system (first unit 200 and or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

FIG. 5D depicts an AC electrical architecture for a variable speed first unit 200 in an example embodiment. The location of components in FIG. 5D is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the disclosure.

FIG. 5D is similar to FIG. 5B, with the exception that the compressor drive 244A provides for variable speed operation of the compressor 242. Other loads 248 of the first unit 200 may be powered from the AC power bus 305.

Not all components of the first unit 200 are shown for ease of illustration and explanation. The power converter 230 may be used in conjunction with the embodiments described above, or other embodiments. For example, one or more auxiliary DC sources 314 may be connected to the energy storage device 240 (via a DC bus) to supplement power from the energy storage device 240.

The controller 220, the power converter 230 and the energy storage device 240 may be retrofit to an existing first unit 200. This allows the energy storage device 240 to be added to existing air conditioning systems to enable the first unit 200 to operate independent of the AC power grid 302 or operate under power from both the AC power grid and the energy storage device 240.

The electrical architecture of FIG. 5D allows one or more components of the air conditioning system (first unit 200 and or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

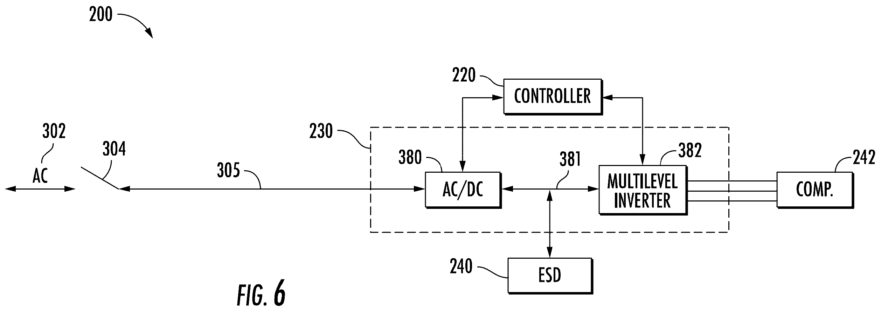

FIG. 6 depicts an electrical architecture having a variable speed compressor drive including a multilevel inverter in an example embodiment. Not all components of the first unit 200 are shown for ease of illustration and explanation. The location of components in FIG. 6 is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the disclosure.

As shown in FIG. 6, AC power from the AC power grid 302 is supplied through the grid disconnect 304 to power converter 230. The power converter 230includes an AC/DC converter 380 and a multilevel inverter 382. The output of the multilevel inverter 382 is provided to the compressor 242. The output of the multilevel inverter 382 may be a multi-phase, multi-level waveform configured to drive a multi-phase motor of the compressor 242. In an example embodiment, the multilevel inverter 382 is a five-level, three phase inverter. In another example embodiment, the multilevel inverter 382 is a three-level, three phase inverter.

The multilevel inverter 382 synthesizes a sinusoidal current waveform to run and control the compressor 242. This is done traditionally by a two-level inverter. Integration with the energy storage device 240 allows for a natural progression to higher order inverters. Three and five level inverters require independent power supplies to set the voltage levels. In the embodiment of FIG. 6, the energy storage device 240 can set the voltage levels. The energy storage device 240 may include internal battery modules connected in series. The multilevel inverter 382 directly uses the battery modules for each requisite voltage level thereby enabling the benefits of a multilevel inverter. The multilevel inverter 382 benefits from lower harmonic output and lower dv/dt device stresses. The multilevel inverter 382 increases reliability through the ability to reconfigure to a lower number of levels after a fault has occurred, through the integration of back-to-back switches or relays, connecting or disconnecting battery modules together.

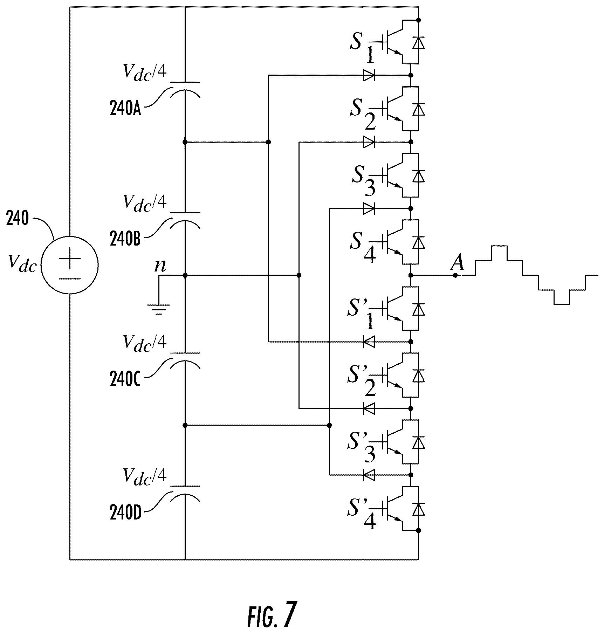

FIG. 7 shows one phase leg of a five level, multiphase inverter in an embodiment of the multilevel inverter 382. The energy storage device 240 includes at least four battery modules 240A, 240B, 240C and 240D, connected in series. The combination of the battery modules 240A, 240B, 240C and 240D, and a neutral point, n, provides the five voltage levels used to create a sinusoidal output waveform on one phase. In general, using N battery module voltages provides for an N+1 level output waveform for each phase. Switches S1-S4 and S1'-S4' are controlled by the controller 220 to produce a sine wave as known in the art. The multilevel inverter 382 can be reconfigured to fewer levels through the integration of back-to-back switches or relays, connecting or disconnecting battery modules together.

The voltage levels used in the multilevel inverter 382 do not need to be supplied by separate battery modules. The voltage levels used to create the sinusoidal output waveform can be created using one battery module, with the battery voltage being split, for example, by capacitors.

Referring the FIG. 6, both the AC/DC converter 370 and the multilevel inverter 382 operate under the control of the controller 220. Between the AC/DC converter 370 and the multilevel inverter 382 is a DC link 381 that is connected to the energy storage device 240. Under this arrangement, energy storage device 240 may be charged by the power converter 230. Alternatively, the energy storage device 240 may provide DC power to the DC link 381 to power the multilevel inverter 382 and compressor 242. This allows the first unit 200 to operate independent of the AC power grid 302 or operate under power from both the AC power grid 302 and the energy storage device 240. The AC/DC converter 380 may be bi-directional to allow the energy storage device 240 to provide power to, and be charged from, the AC power grid.

The electrical architecture of FIG. 6 allows one or more components of the air conditioning system (first unit 200 and or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

In the above embodiments, one or more auxiliary DC sources 314 may be used to provide DC power. The one or more auxiliary DC sources 314, may include sources such as solar DC power, wind DC power, geothermal DC power, fuel cells, etc.

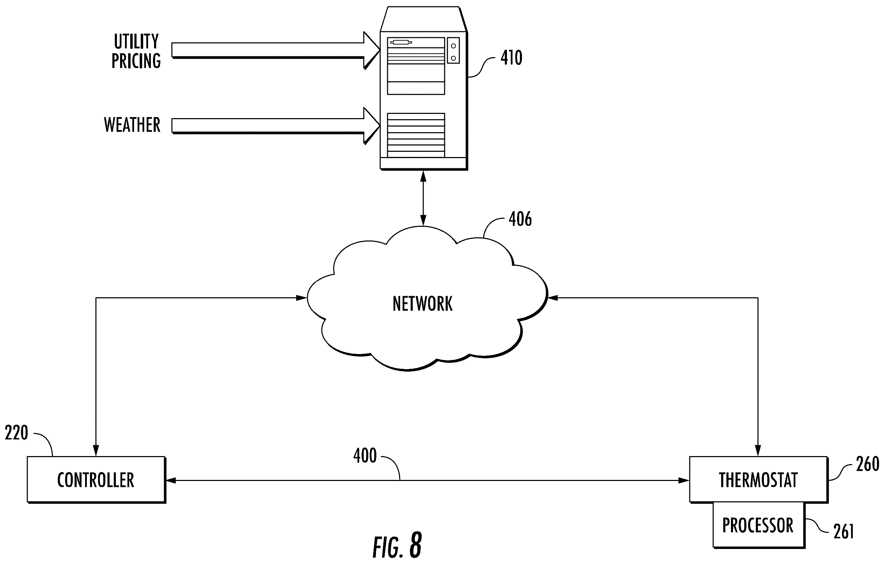

FIG. 8 depicts communication between the controller 220, the thermostat 260 and a remote system 410 in an example embodiment. As noted above, the controller 220 may be integrated as part of an air conditioning controller and/or a battery controller, or be independent and communicating to the air conditioning controller and/or energy storage controller. The controller 220 communicates with the thermostat 260 over a local link 400. The local link 400 may be a wired connection (e.g., twisted pair, four wire, power line communication, Modbus, CAN bus, etc.) and/or a wireless connection (e.g., WiFi, radio or Bluetooth, NFC, etc.). The thermostat 260 may also be implemented using a software application operating on a user device (e.g., mobile phone, tablet, laptop). The thermostat 260 may also provide occupancy, past performance, and weather information to the controller 220.

One or both of the controller 220 and the thermostat 260 may be in communication with a remote system 410 over a network 406. The network 406 may be a long range network and may be implemented by a variety of communication protocols. The network 406 may be implemented via one or more networks, such as, but are not limited to, one or more of WiMax, a Local Area Network (LAN), Wireless Local Area Network (WLAN), a Personal area network (PAN), a Campus area network (CAN), a Metropolitan area network (MAN), a Wide area network (WAN), a Wireless wide area network (WWAN), or any broadband network, and further enabled with technologies such as, by way of example, Global System for Mobile Communications (GSM), Personal Communications Service (PCS), Bluetooth, Wi-Fi, Matter, Fixed Wireless Data, 2G, 2.5G, 3G (e.g., WCDMA/UMTS based 3G networks), 4G, IMT-Advanced, pre-4G, LTE Advanced, 5G, 6G, mobile WiMax, WiMax 2, WirelessMAN-Advanced networks, enhanced data rates for GSM evolution (EDGE), General packet radio service (GPRS), enhanced GPRS, iBurst, UMTS, HSPDA, HSUPA, HSPA, HSPA+, UMTS-TDD, 1xRTT, EV-DO, messaging protocols such as, TCP/IP, SMS, MMS, extensible messaging and presence protocol (XMPP), real time messaging protocol (RTMP), instant messaging and presence protocol (IMPP), instant messaging, USSD, IRC, or any other wireless data networks, broadband networks, or messaging protocols.

The remote system 410 may be embodied as any type of processor-based computation or computer device capable of performing the functions described herein, including, without limitation, a computer, a server, a workstation, a desktop computer, a laptop computer, a notebook computer, a tablet computer, a mobile computing device, a wearable computing device, a network appliance, a web appliance, a distributed computing system (e.g., cloud computing), a processor-based system, and/or a consumer electronic device. The remote system 410 provides information that is used by the controller 220 and/or thermostat 260 to implement an energy management routine that controls how power is consumed by the one or more components of the air conditioning system and the loads 270. The information provided by the remote system 410 may include utility pricing, indicating the cost of electricity on the AC power grid 302 and weather information, which may be used to predict future utility pricing and usage of the one or more components of the air conditioning system. The utility pricing and weather may be pushed to, or pulled by, the remote system 410 using known networking techniques. The utility pricing and/or weather may be determined in real time or be forecasts of future conditions.

In the above-described embodiments, the controller 220 communicates with components of the described systems using wired and/or wireless connections, which are not illustrated in the drawings. Depending on the power sources used in an operation mode (e.g., one or more of AC grid power, energy storage device power, auxiliary power sources, etc.) the controller 220 sends command signals to the various system components, (for example, AC/AC converter 310, AC/DC converter 312, DC/AC converter 347, DC/DC converter 320, DC/DC converter 316, DC/DC converter 241, AC/DC converter 370, DC/AC converter 372, AC/DC converter 380 and/or multilevel inverter 382, AC disconnect 304, etc.) to route power to one or more components of the air conditioning system, such as the first unit 200, the second unit(s) 250, along with the indoor load(s) 270, and any other loads.

FIG. 9 depicts an energy management process in an example embodiment. The process may be performed by the controller 220 and/or by the thermostat 260. At 600, the controller 220 determines if a request for a reduction in energy usage is present, or any other communication signal, such as a change in energy pricing, or an incentive. The utility provider may request a reduction in energy usage during a certain period of time to avoid a service interpretation (e.g., a brownout), or other penalty or incentive such as a change in pricing. The request for a reduction in energy usage may be accompanied by an incentive (e.g., $5 off next energy bill). The request for reduction may also originate from an energy consumer, such as a data center, where the data center needs to maintain their processing and/or cooling loads and incentivizes other users to decrease their consumption to ensure energy availability.

If a request for a reduction in energy usage is present, flow proceeds to 602 where a user (e.g., a customer of the utility) can approve or deny the request to reduce energy usage. The approve or deny determination may be pre-established by the user and pre-programmed into the controller 220 and/or the thermostat 260. For example, the user may wish to always reduce energy consumption, regardless of the terms. The user may wish to never reduce energy consumption, regardless of the terms. The user may wish to reduce energy consumption only if the utility offers an incentive. The approve or deny determination at 602 may also be in real time, where the user enters an approval or denial of reduced energy consumption through the thermostat 260 or through a mobile device.

If the user approves reduced energy usage at 602, flow proceeds to 604 where one or more components of the air conditioning system (if needed), and/or other loads, are powered, at least in part, by the energy storage device 240. This may entail opening the AC disconnect 304 (e.g., power from the AC power grid 302 is zero) and powering one or more components of the air conditioning system and/or other loads, using only the energy storage device 240. Operating one or more components of the air conditioning system and/or other loads may also include using both the AC power grid 302 and the energy storage device 240, in conjunction, to power the one or more components of the air conditioning system and/or other loads. The controller 220 can limit the amount of power drawn from the AC power grid 302 by controlling the various power converters 230 in the system (e.g., AC/AC converter 310, AC/DC converter 312, DC/AC converter 347, DC/DC converter 320, DC/DC converter 316, DC/DC converter 241, AC/DC converter 370, DC/AC converter 372, AC/DC converter 380 and/or multilevel inverter 382) to reduce the amount of AC power drawn from the AC power grid 302. The energy storage device 240 and the AC power grid 302 are used in conjunction to power one or more components of the air conditioning system and/or one or more loads.

Operating the one or more components of the air conditioning system using the energy storage device 240 may also include limiting the amount of power used from the AC power grid 302 to a power limit (e.g., 1 kW during 2 hours). The controller 220 can limit the amount of power drawn from the AC power grid 302 by controlling the various power converters 230 in the system (e.g., AC/AC converter 310, AC/DC converter 312, DC/AC converter 347, DC/DC converter 320, DC/DC converter 316, DC/DC converter 241, AC/DC converter 370, DC/AC converter 372, AC/DC converter 380 and/or multilevel inverter 382) to reduce the amount of AC power drawn from the AC power grid 302. At 604, other loads may be powered by the energy storage device 240, including indoor load(s) 270, which may include indoor DC load(s) 318 and/or indoor AC load(s) 308. The process returns to 600.

At some point, the energy storage device 240 will lack sufficient charge such that the one or more components of the air conditioning system will need to be powered exclusively by the AC power grid 302. The controller 220 can detect when a status, such as state of charge (SOC), state of health (SoH), voltage, temperature, etc., of the energy storage device 240 is not within acceptable limits to power the one or more components of the air conditioning system or other loads. If the status of the energy storage device 240 is not within acceptable limits, the one or more components of the air conditioning system and/or other loads need to be powered by the AC power grid 302. This results in discontinuing discharging the energy storage 240 and/or initiating charging the energy storage device 240.

If the utility, or some other source, has not requested to reduce the energy usage at 600, flow proceeds to 606 where the controller 220 determines if the system 100 should use power from the energy storage device 240. One example of a situation where the system 100 should use power from the energy storage device 240 occurs when the utility power is at least one of at a peak price, approaching a grid capacity or at the grid capacity. This determination may be made in real time or may be made previously using forecasting and communicated to the air conditioning system from the utility. Peak price does not necessarily require that the price for electricity be at a maximum, but is generally known in the art as a period of higher than average energy costs. Whether the utility is at a peak price may be determined by utility pricing obtained from the remote system 410 or current or future weather information obtained from the remote system 410. This information may also be locally stored at controller 220. If the utility is at least one of at a peak price, approaching a grid capacity or at the grid capacity, flow proceeds to 604 where the one or more components of the air conditioning system and loads 270, including indoor AC loads 308 and/or other loads are powered by the energy storage device 240 alone or in conjunction with the AC power grid 302. The controller 220 can limit the amount of power drawn from the AC power grid 302 by controlling the various power converters 230 in the system, as noted above. The utility power at a peak price and grid capacity are not the only factors that may be relied on in determining that the system should use power from the energy storage device 240.

With respect to grid capacity, information regarding the grid capacity and current grid load can be obtained from a remote system, such as the source of the utility pricing. If the AC power grid 302 is at grid capacity or approaching grid capacity (e.g., within a threshold range of grid capacity and, optionally, increasing), then it may be prudent to use power from the energy storage device 240 to avoid a power disruption.

Another example of a situation where the system should use power from the energy storage device 240 occurs when a user requests reduced energy usage. The user may use the thermostat 260 to place the system 100 in reduced energy usage mode (e.g., eco-friendly mode) which causes the system to use power from the energy storage device 240 to power one or more components of the air conditioning system.

In another example, the system may use power from the energy storage device 240 based on machine learning (ML) and/or artificial intelligence (AI) control algorithms implemented by controller 220 based on data from block 602 (e.g., User agree), or based on data from block 600 (e.g., Request reduced energy usage).

If at 606, the system should not use power from the energy storage device 240, flow proceeds to 608 where the energy storage device 240 is charged using the AC power grid 302. At 610, the controller 220 determines if the battery status is within acceptable limits, including state of charge (SOC), state of health (SoH), temperature, voltage, or status beyond safety and/or operational limits. If yes, flow returns to 600. At 610, the controller 220 can detect parameters of the energy storage device 240, to confirm that parameters such as state of health of the battery, operating range, temperature range, voltages, capacity, etc., are within the valid limits.

It should be noted that the energy storage device 240 may be charged even if the utility power is at a peak price. This may include failure modes, test modes, etc. Thus, charging the energy storage device 240 is not limited to off-peak utility power price times.

If at 610, the energy storage device has a status that is not within acceptable limits, flow proceeds to 612 where the energy storage device 240 may be charged if the SoC is low or may be disconnected completely if the energy storage device 240 is not operating per safety and/or operational limits.

While FIG. 9 refers to operating one or more components of the air conditioning system and/or other loads to reduce power consumption, other techniques may be used to reduce power consumption, such as using a variable speed drive to reduce compressor speed, changing a thermostat set-point, etc. In other embodiments, the utility could request an increase in energy usage. This request can be a real-time or a future request based on predicted conditions. Increasing energy usage may include charging the energy storage device 240.

One or more operations of the process of FIG. 9 may be performed by the thermostat 260 if the thermostat 260 is equipped with a processor 261. The processor 261 may be implemented using a general-purpose microprocessor executing a computer program stored on a storage medium to perform the operations described herein. Alternatively, the processor 261 may be implemented in hardware (e.g., ASIC, FPGA) or in a combination of hardware/software. The controller 220 and thermostat may perform all or some of the operations of FIG. 9, in conjunction or individually.

In other embodiments, the controller 220 and/or the thermostat 260 executes a system enhancement routine to improve performance of the entire air conditioning system, based on optimization (including model predictive controls) or machine learning techniques, considering carbon impact, energy performance, energy cost, lifecycle cost, lifetime impact on equipment, reliability. The system enhancement routine may operate with or without use of information regarding weather, occupancy, historical usage, customer preferences, equipment performance maps (HVAC, battery), potential for energy outages etc. Machine learning techniques on customer preferences, usage, elasticity of decisions regarding temperature, cost, environmental issues, etc. could be used to improve controls logic, and optimization. Other control strategies such as pre-cooling and preheating that have an advantage on cost, performance, efficiency, environment, comfort, reliability, may be implemented by the controller 220 and/or the thermostat 260.

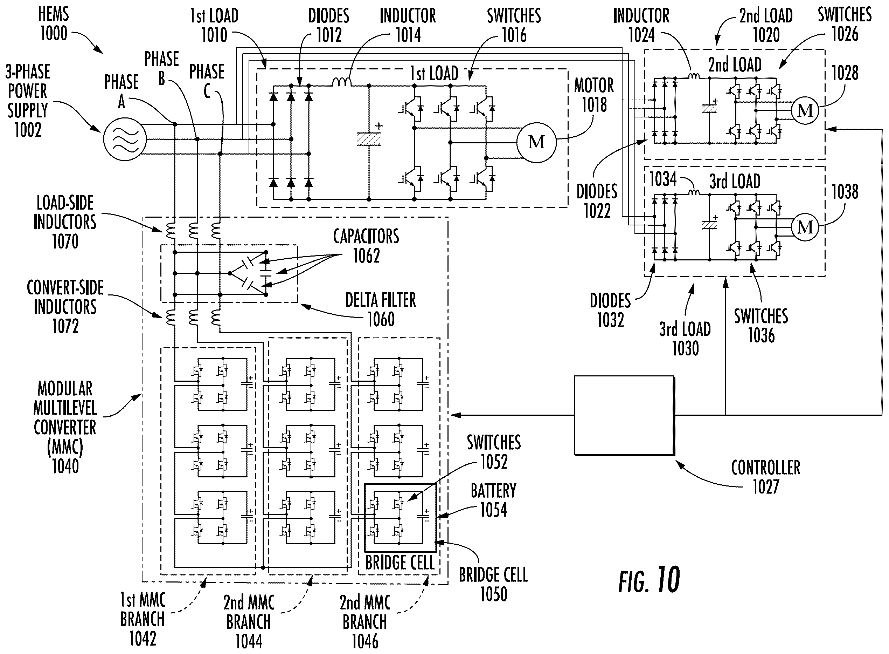

Turning now to FIG. 10, a HEMS 1000 is illustrated according to a non-limiting embodiment. The HEMS 1000 includes a first load 1010, a second load 1020, a third load 1030, and a modular multi-level converter (MMC) 1040. Each of the first load 1010, the second load 1020, the third load 1030, and the MMC 1040 receive power from a three-phase power supply 1002. Although three loads are shown, it should be appreciated that more or less loads can be implemented in the HEMS 1000 without departing from the scope of the invention.

The first load 1010 can be implemented, for example, as a compressor included in an air conditioning system. The first load 1010 is electrically connected to the three-phase power supply 1002 through a power conversion and control circuit comprising diodes 1012, inductor 1014, switches 1016, and a motor 1018. In this embodiment, the three-phase power from Phase A, Phase B, and Phase C is rectified, filtered, and conditioned to provide a reliable and efficient source of power for the motor, which may represent a component of a residential or industrial system, such as an HVAC compressor, fan motor, or other load.

The diodes 1012 are arranged in a three-phase full-wave bridge rectifier configuration, with each phase connected to a pair of diodes. This rectification circuit is designed to convert the incoming three-phase AC power into a pulsating DC voltage by allowing current to flow in only one direction for each half-cycle of the AC waveform. The diodes rectify the alternating current by directing the positive and negative half-cycles of each phase into a common positive DC bus and ground. As a result, the rectified output provides a unidirectional current flow suitable for the downstream components of the system.

After rectification, the pulsating DC voltage is smoothed by inductor 1014, which is positioned downstream of the diode bridge. The inductor acts to filter the DC voltage, mitigating current ripples and transient spikes that could otherwise degrade the performance of the motor. By resisting rapid changes in current, the inductor ensures that the motor 1018 receives a more consistent and stable DC power supply, improving its operational efficiency and extending its service life.

The switches 1016 are arranged in series with the motor and provide control over the connection of the motor to the DC bus. In some embodiments, the switches are solid-state devices, such as insulated-gate bipolar transistors (IGBTs) or metal-oxide-semiconductor field-effect transistors (MOSFETs), allowing for high-speed switching control. The switches may be operated by a controller 1027 to regulate the power supplied to the motor, enabling features such as on/off control, soft start, and variable speed operation. In other embodiments, the switches may be implemented using mechanical contactors, providing robust isolation and protection for the motor under certain conditions.

The motor 1018, which may be an electric motor used for driving a load (e.g., a compressor or fan), receives power from the filtered DC voltage provided by the rectifier and inductor circuit. The motor is capable of operating at varying speeds depending on the control signals received from the switches. In some embodiments, the motor may be part of a larger system, such as a heating, ventilation, and air conditioning (HVAC) unit or other household appliances, where precise control over motor operation is necessary for optimizing energy consumption and performance.

In operation, the first load 1010 allows for efficient conversion of three-phase AC power into DC power suitable for driving the motor, while ensuring the voltage and current supplied to the motor are conditioned and controlled to maximize efficiency and performance. The combination of diodes 1012, inductor 1014, switches 1016, and the motor 1018 provides a flexible and reliable power solution for applications requiring precise control of motor-driven loads.

The second load 1020 is similarly connected to the three-phase power supply 1002 and is configured to receive conditioned and controlled power through a circuit comprising diodes 1022, inductor 1024, switches 1026, and a motor 1028. According to a non-limiting embodiment, the second load 1020 can be implemented, for example, as an outdoor fan included in an air conditioning system to provide heat dissipation and enhance the energy efficiency of systems like HVAC units by providing effective cooling for outdoor components such as condenser.

According to a non-limiting embodiment, the diodes 1022 are arranged in a full-wave bridge rectifier configuration to perform AC-to-DC conversion. Each of the phases (Phase A, Phase B, and Phase C) from the three-phase power supply 1002 is connected to a pair of diodes 1022. During operation, the diodes 1022 allow current to flow in one direction, effectively rectifying the alternating current (AC) into direct current (DC). This process ensures that the motor 1028 is supplied with a unidirectional flow of current, providing the necessary power for efficient operation.

The rectified DC output is then passed through an inductor 1024, which is connected in series with the motor 1028 and functions as a current filter. The inductor 1024 reduces voltage ripples and smooths the pulsating DC signal generated by the rectifier circuit. By resisting sudden changes in current, the inductor 1024 ensures a stable and continuous supply of DC power to the motor, minimizing electrical noise and improving the overall performance and longevity of the motor 1028.

The switches 1026 are connected in series between the DC supply and the motor 1028 to provide electronic control over the operation of the motor 1028. In one embodiment, the switches 1026 are solid-state devices, such as insulated-gate bipolar transistors (IGBTs) or metal-oxide-semiconductor field-effect transistors (MOSFETs), which are capable of rapid switching under control of an external controller 1027. These switches 1026 enable the HEMS 1000 to control the power flow to the motor, allowing for on/off control, speed regulation, or modulated operation depending on system requirements. The ability to rapidly switch the connection between the motor 1028 and the power source 1002 allows the controller 127 to optimize energy usage and operational efficiency.

Like the first and second loads 1010 and 1020, the third load 1030 is configured to receive power from the three-phase power supply 1002 through a power conditioning circuit comprising diodes 1032, inductor 1034, switches 1036, and a motor 1038, which may, for example, be implemented as an indoor fan motor. The circuit for the third load converts the three-phase AC input into regulated DC power, ensuring efficient and reliable operation of the motor 1038 in various applications, including indoor air circulation or ventilation systems.

The diodes 1032 are arranged in a three-phase bridge rectifier configuration to perform AC-to-DC conversion. Each phase (Phase A, Phase B, and Phase C) from the power supply 1002 is connected to a pair of diodes 1032 in the rectifier circuit. The diodes 1032 function to allow current flow only in one direction, rectifying the alternating current from the three-phase power supply 1002 into a pulsating DC output. This rectified DC power serves as the primary input to the subsequent filtering and control stages, providing the necessary power for the motor 1038.

Following the rectifier, the inductor 1034 is connected in series with the motor 1038 and serves as a filtering component, designed to smooth out any ripple present in the rectified DC voltage. By opposing sudden changes in current, the inductor ensures that the DC power supplied to the motor 1038 is free from fluctuations or noise, which could negatively affect the operation of the motor or reduce its efficiency. The inductor 1034 thus plays a key role in improving the performance of the motor 1038, ensuring consistent and reliable operation, especially in applications where steady airflow is critical, such as with an indoor fan.

The switches 1036, positioned in series with the motor 1038, provide electronic control over the power supplied to the motor 1038. In one embodiment, these switches 1036 may be solid-state devices such as insulated-gate bipolar transistors (IGBTs) or metal-oxide-semiconductor field-effect transistors (MOSFETs), controlled by an external controller 1027 to modulate the power supplied to the motor 1038. The switches 1036 enable on/off control, speed adjustment, and modulation of the motor 1038, allowing the HEMS 1000 to optimize performance based on demand or environmental conditions. For instance, the switches 1036 may regulate the airflow generated by the motor 1038, adjusting the fan speed, e.g., in response to indoor temperature or air quality sensors.

The motor 1038 is driven by the filtered and regulated DC power supplied by the rectifier, inductor, and switching circuit. The motor 1038 can provide reliable airflow for indoor ventilation or climate control purposes. The combination of the rectification, filtering, and switching control allows the motor 1038 to operate with high efficiency, minimal power loss, and reduced noise. Additionally, the ability to adjust the speed of the motor 1038 through the switching circuit ensures that the load (e.g., indoor fan) can adapt to varying airflow requirements, maintaining comfort and energy efficiency.

With continued reference to FIG. 10, the MMC 1040 is implemented as a multi-phase MMC 1040 configured to receive power from the power supply 1002 and convert it into a regulated multi-level output for the first, second and third loads 1010, 1020 and 1030. Although a multi-phase MMC 1040 is described in FIG. 10, it should be appreciated that the HEMS may implement an MMC having a different topology, such as a single-phase MMC for example, without departing from the scope of the invention.

As shown in FIG. 10, the MMC 1040 includes a first MMC branch 1042, a second MMC branch 1044, and a third MMC branch 1046 (collectively referred to as MMC branches 1042-1046). Each of the MMC branches 1042-1046 includes a series of bridge cells 1050. The MMC 1040 also includes a plurality of load-side inductors 1070, a plurality of converter-side inductors 1072, and a filter 1060. One or more of the inductors 1070 and/or the filter 1060 can serve as an input to provide the power from the power supply 1002 to the MMC 1040. The load-side inductors 1070, converter-side inductors 1072 and filter 1060 operate together to facilitate efficient power conversion, harmonic filtering, and stable voltage output.

The first, second and third MMC branches 1042-1046 correspond to the three phases (Phase A, Phase B, and Phase C) of the power supply 1002. Each of the MMC branches 1042-1046 is connected to one phase output of the three-phase power supply 1002 and is responsible for converting the respective phase (e.g., Phase A, Phase B, Phase C) into a stepped multilevel DC output. For example, the first MMC branch 1042 is connected to a first phase output (Phase A), the second MMC branch 1044 is connected to a second phase output (Phase B), and the third MMC branch 1046 is connected to a third phase output (Phase C).

Each of the MMC branches 1042-1046 includes a series of bridge cells 1050. Each bridge cell 1050 includes a plurality of power switches 1052 and a battery 1054. The power switches 1052 and the battery 1054 are connected in a manner that selectively adds or subtracts voltage from the corresponding branch by inserting or bypassing each bridge cell 1050 as needed. In a non-limiting embodiment, the power switches 1052 are connected to establish a bridge rectifier and the battery 1054 is connected in parallel with the bridge rectifier. According to a non-limiting embodiment, the power switches 1052 in each bridge cell 1050 control whether a given bridge cell 1050 is inserted into or bypassed from the MMC 1040, and the battery 1054 stores energy to allow for the creation of multiple discrete voltage levels.

The batteries 1050 can be implemented as low voltage batteries that provide a voltage ranging, for example, from 3.0 volts(V) to 3.5V, or high voltage batteries that provide a voltage ranging from 50V to 200V. Each bridge cell 1050 also utilizes the battery 1054. In this manner, the MMC 1040 achieves a larger energy storage benefit that cannot be achieved using capacitors in place of the batteries 1050. In addition, the battery 1054 implemented in each bridge cell 1050 facilitates seamless charge control to achieve a reduction in voltage sag and/or swell that cannot be achieved using capacitors in place of the batteries 1054. In one or more non-limiting embodiments, the batteries 1054 are rechargeable batteries. Accordingly, the batteries 1054 can be connected to various power sources to be recharged to provide continuous operation.

In operation, the switches 1052 within a bridge cell 1050 are controlled to achieve a stepped voltage waveform, with each bridge cell contributing a voltage equal to the charge across its battery 1054. The operation of the power switches 1052 of each bridge cell 1050 within each MMC branch 1042-1046 is coordinated to produce a multilevel stepped output that approximates a sinusoidal waveform. This multilevel stepped output is created by adding or subtracting the voltage of individual bridge cells 1050 in rapid succession, allowing the MMC 1040 to efficiently convert the input AC power output form the power supply 1002 into a highly controlled and low-harmonic DC output suitable for driving the first, second and third loads 1010, 1020 and 1030. This multilevel approach reduces harmonic distortion and improves the quality of the output waveform, while also enhancing the overall efficiency of the conversion process. According to a non-limiting embodiment, the switching of the bridge cells 1050 can be dynamically controlled to ensure the voltage levels are adjusted smoothly and that the correct power is delivered to the loads, with minimal losses.

According to a non-limiting embodiment, the filter 1060 is constructed as a delta filter 160, which includes filter capacitors 1062 arranged in a delta configuration and is electrically connected across the MMC branches 1042-1046 to provide harmonic filtering and voltage balancing between the phases. Although a delta filter 1060 is illustrated, it should be appreciated that other filter circuits can be utilized including, but not limited to, a single inductor filter, or an inductor-capacitor-inductor (LCL) filter, sometimes referred to as a "line" filter.

The delta configuration of the delta filter 1060 is particularly effective at reducing third-order harmonics and other high-frequency noise that may result from the stepped voltage output of the MMC 1040. For example, the filter capacitors 1062 in the delta filter 1060 absorb high-frequency components from the MMC's output, smoothing the waveform and ensuring that the power supplied to the first, second and third loads 1010, 1020 and 1030 is of high quality. Accordingly, the delta filter 1060 can reduce the harmonic content of the multilevel waveform produced by the MMC 1040, thereby ensuring the HEMS1000 operates with minimal interference and power loss.

The load-side inductors 1070 and converter-side inductors 1072 are provided to further smooth the current and reduce voltage ripple in the output of the MMC 1040. The converter-side inductors 1072 are connected between the output of the MMC branches 1042-1046 and the bridge cells 1050 of a corresponding MMC branch 1042-1046 to manage the dynamic current changes resulting from the switching actions within the MMC 1040. Accordingly, the converter-side inductors 1072 help to smooth the high-frequency switching transients and prevent them from propagating through the HEMS 1000.

The load-side inductors 1070 are connected between the MMC input and the power supply1002 to further filter the current and stabilize the power delivered to the first, second and third loads 1010, 1020 and 1030. The load-side inductors 1070 provide additional filtering to prevent electrical noise from affecting the performance of the first, second and third loads 1010, 1020 and 1030. By reducing the ripple in the output current, the load-side inductors 1070 help maintain the longevity and efficiency of the first, second and third loads 1010-1030.

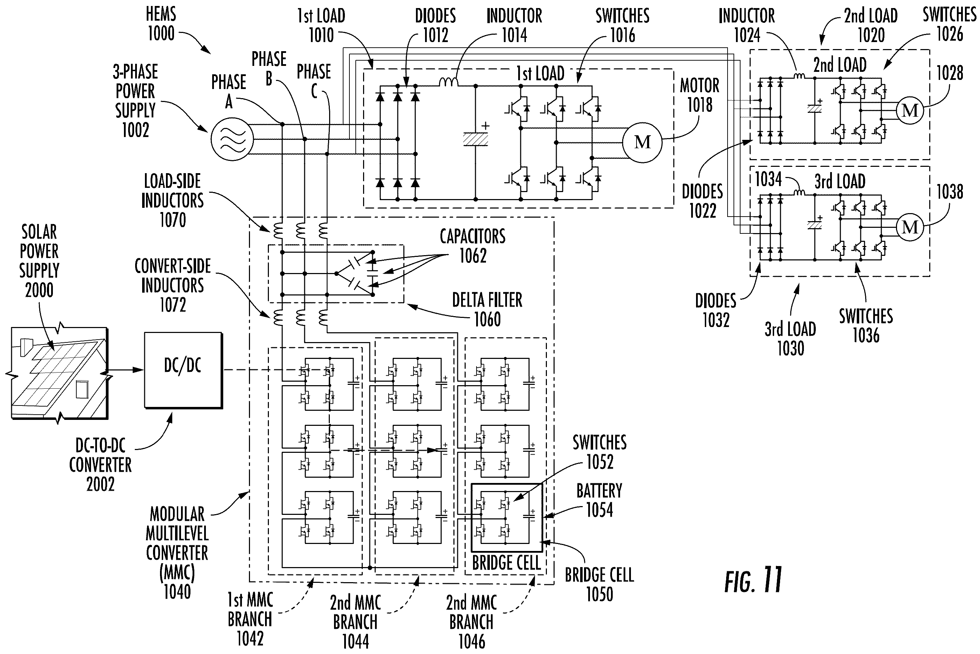

FIG. 11. depicts a MMC topology for the HEMS 1000 shown in FIG. 10, which implements a solar panel power source 2000 (often referred to as a "solar panel"). Although one solar panel 2000 is illustrated, it should be appreciated that additional solar panels 2000 can be implemented without departing from the scope of the disclosure. The loads 1010-1030 operate in a similar manner to the loads illustrated in FIG. 10. Therefore, detailed descriptions of the loads 1010-1030 will not be repeated for the sake of brevity.

The solar panel 2000 converts sunlight into direct current (DC) electricity through photovoltaic (PV) cells, which is then routed to a direct current-to-direct current (DC/DC) converter 2002. The DC/DC converter 2002 regulates the voltage and current levels from the solar panel 2000, ensuring efficient power transfer to the connected (rechargeable) battery 1054. A controller 1027 can be connected to the DC/DC converter 2002 and regulates the power flow to prevent overcharging or damage to the battery 1054. The DC power output from the DC/DC converter 2002 charges a connected battery 1054. In this manner, each connected battery 1054 can store excess solar energy during periods of high sunlight and discharge it when solar generation is insufficient (e.g., at night). The MMC 1040 converts the stored DC power from one or more of the batteries 1054 into a multilevel AC output, providing a smooth and efficient power supply to connected loads 1010-1030. Accordingly, the MMC topology of the HEMS 1000 that implements the solar panel 2000 enables energy storage and provides continuous power availability.

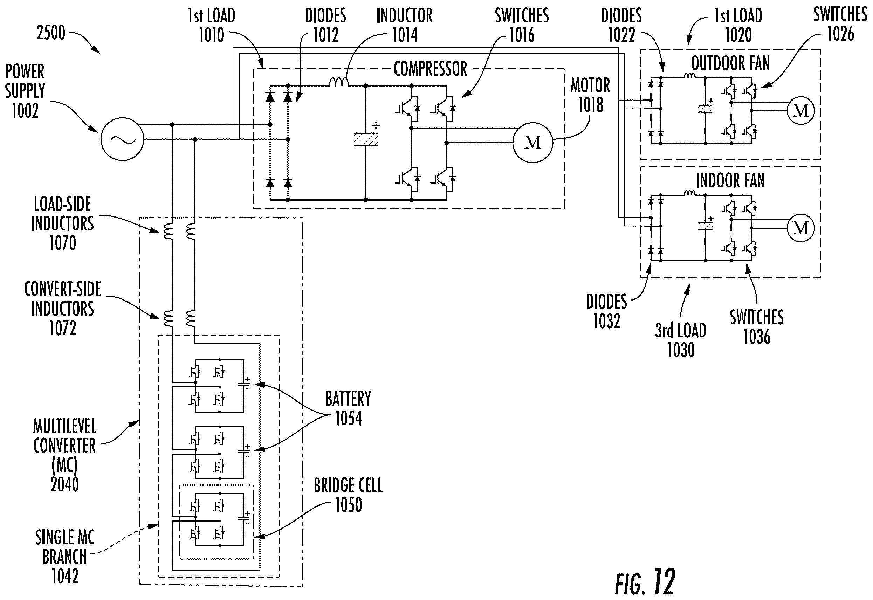

FIG. 12 illustrates a single-phase MMC topology for an HEMS 2500 is illustrated according to a non-limiting embodiment of the present disclosure. The loads 1010-1030 operate in a similar manner to the loads illustrated in FIG. 10. Therefore, detailed descriptions of the loads 1010-1030 will not be repeated for the sake of brevity.

The single-phase MMC topology utilizes a single-phase MMC 2040. Accordingly, the HEMS 2500 can be optimized for applications that require single-phase AC power, and is well-suited for applications in homes or smaller-scale installations where only single-phase AC power is required, reducing the complexity and cost compared to a multilevel converter.

The MMC 2040 implements a bridge converter including a plurality of connected bridge cells 1050 that operate to convert stored DC power into AC power. Each bridge cell 1050 includes a plurality of power switches 1052 and a battery 1054. As described above, a controller (not shown in FIG. 12) can control the power switches 1052 to control the charging and discharging of the batteries 1054 and ensure the batteries 1054 supply power when needed and maintains sufficient charge levels. Accordingly, the single-phase MMC 2040 can provide a more streamlined and cost-effective energy conversion solution, focusing on simplicity while retaining the ability to supply reliable power to single-phase loads.

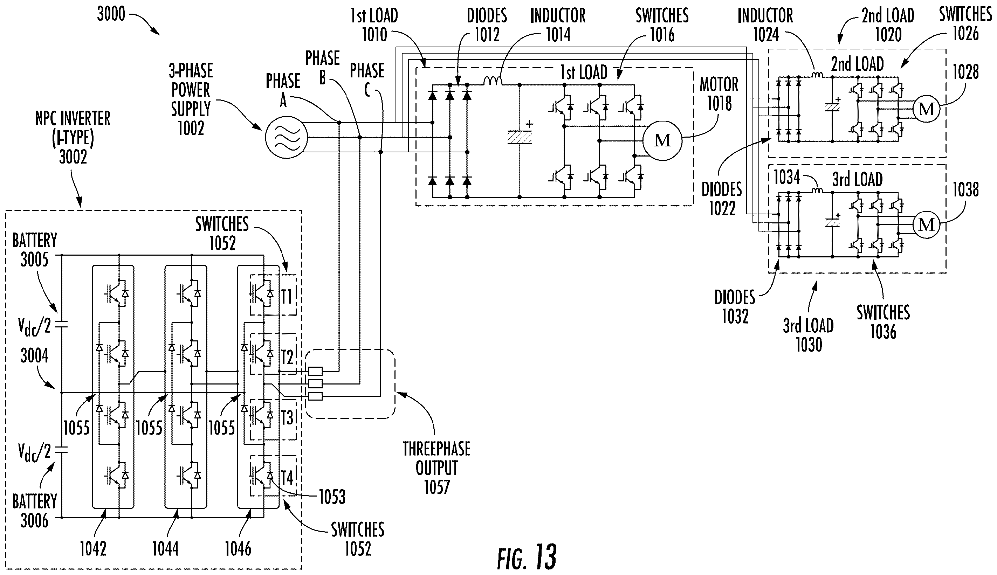

Turning now to FIG. 13, a neutral-point clamp (NPC) topology for a HEMS 4000 is illustrated according to a non-limiting embodiment of the present disclosure. The HEMS 4000 includes an NPC inverter 4002 that supplies power to one or more electrical loads 1010, 1020 and 1030 (collectively referred to as loads 1010-1030). Although three loads 1010, 1020 and 1030 are shown, it should be appreciated that more or less loads can be implemented without departing from the scope of the invention.

The NPC inverter 3002 includes three inverter branches 1042, 1044 and 1046 (collectively referred to as inverter branches 1042-1046), and a pair of DC bus batteries 3005 and 3006. Each inverter branch includes four power switches 1052 (T1, T2, T2, T4). Although three inverter branches are shown, it should be appreciated that more or less inverter branches can be implemented without departing form the scope of the invention.

Each power switch 1052 can be implemented as a semiconductor switching device. For example, each power switch 1052 can be implemented as a IGBT 1052 combined with a respective diode 1053. In a non-limiting embodiment, a clamping diode is used to implement the diode 1053. The power switches 1052 operate in pairs. For example, power switches T1 and T2 operate together, while power switches T3 and T4 operate together. Each pair of switches 1052 (e.g., T1 and T2, T3 and T4) operates together to produce a multilevel AC output 1057, which is delivered to the loads 1010-1030.

The clamping diodes 1053 are connected at a neutral point 1055, between the first pair of power switches 1052 (e.g., T1 and T2) and the second pair of power switches 1052 (T3 and T4). The clamping diodes 1053 allow the NPC inverter 3000 to clamp the output voltage to the neutral points 1055, ensuring it can generate three voltage levels at the output 1057.

The NPC inverter 3000 is powered by a split DC supply provided across positive and negative voltage rails. In this example, the split DC power supply is indicated as V_{DC}/2 for both the positive and negative rails, which creates the neutral point that is established by the connection between of the DC bus batteries 3005 and 3006 the DC bus center node 3004 (i.e., DC bus midpoint).

The DC bus batteries 3005 and 3006 allow the NPC inverter 3000 to provide long-term energy supply and storage. During operation of the NPC inverter 3000, the DC bus batteries 3005 and 3006 operate as the primary energy source to provide a consistent DC voltage that powers the power switches 1052 and generates the multilevel AC output 1057. The DC bus batteries allow for extended periods of operation, especially in off-grid or backup power applications, where the NPC inverter 3000 draws power from the DC bus batteries 3005 and 3006 rather than relying on external sources or short-term capacitive energy storage.

As described above, embodiments can be in the form of processor-implemented processes and devices for practicing those processes, such as one or more controllers configured to control the various HEMS topologies described herein. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes a device for practicing the embodiments. When implemented on a general-purpose microprocessor, the computer program code segments configure the microprocessor to create specific logic circuits.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A home energy management system (HEMS), comprising:
a power supply configured to provide alternating current (AC) power;
at least one load electrically connected to the power supply;
a modular multi-level (MMC) converter configured to receive power from the power supply and to supply a regulated converter output to the at least one load, the MMC comprising:
at least one converter branch in signal communication with the power supply, the at least one converter branch comprises a plurality of bridge cells, wherein each bridge cell including a plurality of power switches and a battery; and
a filter electrically connected between the at least one load and the at least one converter branch, the filter configured to reduce harmonic distortion and high-frequency noise in the converter output.

2. The HEMS of claim 1, wherein the power switches are connected together to establish a bridge rectifier and the battery is connected in parallel with the bridge rectifier.

3. The HEMS of claim 1 or 2, wherein the power supply is a three-phase power supply and the MMC converter is a multiphase MMC configured to receive power from the three-phase power supply.

4. The HEMS of claim 1, 2 or 3, wherein:
at least one converter branch comprises a plurality of converter branches, each of the converter branches corresponding to a respective phase of the three-phase power supply, and
each converter branch comprises a plurality of bridge cells, each of the bridge cells including a plurality of power switches and a battery.

5. The HEMS of any one of claims 1-4, wherein the power supply is a single-phase power supply and the MMC converter is a single-phase MMC.

6. The HEMS of any one of claims 1-5, wherein the at least one converter branch is a single converter branch.

7. The HEMS of any one of claims 1-6, wherein the plurality of power switches is a transistor configured to provide high-speed switching control.

8. The HEMS of any one of claims 1-7, wherein the battery within each bridge cell of the MMC is a rechargeable battery configured to store energy for continuous operation and to dynamically adjust voltage levels, and wherein the filter is a delta filter comprising capacitors arranged in a delta configuration.

9. The HEMS of any one claims 1-8 further comprising a controller configured to regulate the operation of the plurality of power switches to optimize energy usage and minimize power losses,
wherein the MMC is configured to be dynamically controlled such that the voltage levels of the stepped output are adjusted based on the load requirements.

10. A multi-level converter (MMC) configured to supply power to at least one load included in home energy management system (HEMS), the MMC comprising:
a filter configured to receive power to be converted to drive the at least one load; and
at least one converter branch electrically connected to the filter to receive the power and to deliver a converted power, the at least one converter branch including a plurality of bridge cells, wherein each of the bridge cells includes a plurality of power switches and a battery operable together to generate the converted power.

11. The MMC of claim 10, wherein the power switches are connected together to establish a bridge rectifier and the battery is connected in parallel with the bridge rectifier.

12. The MMC of any one of claims 10-11, wherein the at least one converter branch includes a plurality of converter branches that establish a MMC.

13. The MMC of any one of claims 10-12, wherein the at least one converter branch is a single converter branch to establish a single-phase MMC in signal communication with single-phase power supply.

14. The MMC of any one of claims 10-13, wherein the battery is a rechargeable battery configured to store energy for continuous operation and to dynamically adjust voltage levels, and wherein the filter is a delta filter comprising capacitors arranged in a delta configuration.

15. The MMC of any one of claims 10-14 wherein the at least one converter branch is configured to be dynamically controlled such that voltage levels of the stepped output are adjusted based on load requirements of the at least one load.
